# EUROPÄISCHE PATENTSCHRIFT

(11) **EP 1 902 814 B1**
(45) Veröffentlichungstag und Bekanntmachung des Hinweises auf die Patenterteilung: **07.01.2009**
(21) Anmeldenummer: 06405396.0
(22) Anmeldetag: 20.09.2006
(51) Int. Cl.: B23Q 3/10, B23Q 16/02

(54) **Bausatz mit mindestens einer Platte**
Construction kit comprising at least one panel
Kit de construction comprenant au moins un panneau

(43) Veröffentlichungstag der Anmeldung: 26.03.2008
(73) Patentinhaber: Konstruktionsbüro Wüthrich, 4573 Lohn-Ammannsegg (CH)
(72) Erfinder: Roland Wüthrich, CH-4586 Kyburg-Buchegg (CH)
(74) Vertreter: AMMANN PATENTANWÄLTE AG BERN

(56) Entgegenhaltungen:
- EP-A2- 0 338 460
- DE-A1- 2 903 706
- US-A- 4 828 240

## Beschreibung

Die vorliegende Erfindung bezieht sich auf einen Bausatz mit mindestens einer Platte gemäss Oberbegriff des Anspruchs 1.

Mittels eines derartigen Bausatzes kann eine Anordnung aus Platten gebildet werden, welche präzise Winkel und Distanzen aufweist und welche bei Bedarf wieder auseinandergenommen werden kann. Derartige Anordnungen sind verschieden einsetzbar, z.B. als Aufspannvorrichtung für Werkstücke, als Montagevorrichtung, Prüfvorrichtung, etc.

Aus der EP 338 460 A2 ist ein Bausatz mit einer Platte bekannt, welche Durchgangsbohrungen mit kreiszylindrischen Senkungen aufweist. Zum Verbinden zweier Platten werden kreiszylindrische Verbindungselemente in Form von Befestigungsschrauben sowie Muttern in den Senkungen aufgenommen. Es sind geeignete Massnahmen vorzusehen, die beim Anziehen der Befestigungsschrauben die Verbindungselemente gegen ein Verdrehen sichern. Zu diesem Zweck ist u.a. die Mutter mit einem Schlitz für einen Schraubenzieher versehen, während die Befestigungsschraube eine Vertiefung für ein Sechskantwerkzeug aufweist. Diese Ausgestaltung erschwert den raschen Aufbau einer Anordnung, da der Benutzer zwei Werkzeuge gleichzeitig handhaben muss und beide Seiten der Platten zugänglich sein müssen.

Ausgehend von diesem Stand der Technik liegt eine Aufgabe der vorliegenden Erfindung darin, den bekannten Bausatz derart weiterzubilden, dass der Aufbau einer Anordnung vereinfacht wird.

Ein Bausatz, der diese Aufgabe löst, ist im Anspruch 1 angegeben. Die weiteren Ansprüche geben bevorzugte Ausführungen des Bausatzes an.

Der erfindungsgemässe Bausatz umfasst mindestens eine Platte, bei welcher beidseitig der Durchgangsbohrungen Senkungen mit einem nicht-kreisförmigen Querschnitt angeordnet sind. Diese Formgebung hat den Vorteil, dass auf einfache Weise Mittel bereitgestellt sind, um ein in der Senkung aufgenommenes Verbindungselement gegen ein Verdrehen zu sichern. Die Handhabung beim Aufbau einer Anordnung ist dadurch vereinfacht. Insbesondere können durch Handhabung eines einzigen Werkzeugs mehrere Platten miteinander verbunden werden.

Die Erfindung wird im Folgenden anhand eines Ausführungsbeispiels unter Bezugnahme auf Figuren erläutert.
Es zeigen
Fig. 1 eine Draufsicht einer Platte eines erfindungsgemässen Bausatzes;
Fig. 2 eine Seitenansicht der Platte gemäss Fig. 1;
Fig. 3 eine Schnittansicht der Platte gemäss der Linie III-III in Fig. 1;
Fig. 4 eine Ansicht eines ersten Verbindungselements in einem Schnitt gemäss der Linie IV-IV in Fig. 5;
Fig. 5 eine Draufsicht des Verbindungselements gemäss Fig. 4;
Fig. 6 eine perspektivische Ansicht des Verbindungselements gemäss Fig. 4;
Fig. 7 eine Ansicht eines zweiten Verbindungselements in einem Schnitt gemäss der Linie VII-VII in Fig. 8;
Fig. 8 eine Draufsicht des Verbindungselements gemäss Fig. 7;
Fig. 9 eine perspektivische Ansicht des Verbindungselements gemäss Fig. 7;
Fig. 10 eine Ansicht eines dritten Verbindungselements in einem Schnitt gemäss der Linie X-X in Fig. 11;
Fig. 11 eine Draufsicht des Verbindungselements gemäss Fig. 10;
Fig. 12 eine perspektivische Ansicht des Verbindungselements gemäss Fig. 10;
Fig. 13 eine Ansicht eines vierten Verbindungselements in einem Schnitt gemäss der Linie XIII-XIII in Fig. 14;
Fig. 14 eine Draufsicht des Verbindungselements gemäss Fig. 13;
Fig. 15 eine perspektivische Ansicht des Verbindungselements gemäss Fig. 13;
Fig. 16 eine perspektivische, teilweise geschnittene Ansicht einer ersten Anordnung mit zwei miteinander verbundenen Platten;
Fig. 17 eine perspektivische, teilweise geschnittene Ansicht einer zweiten Anordnung mit zwei miteinander verbundenen Platten;
Fig. 18 eine perspektivische, teilweise geschnittene Ansicht einer dritten Anordnung mit drei miteinander verbundenen Platten;
Fig. 19 eine perspektivische, teilweise geschnittene Ansicht einer vierten Anordnung mit mehreren miteinander verbundenen Platten; und
Fig. 20 eine perspektivische, teilweise geschnittene Ansicht einer weiteren Ausführungsform der Platte eines erfindungsgemässen Bausatzes.

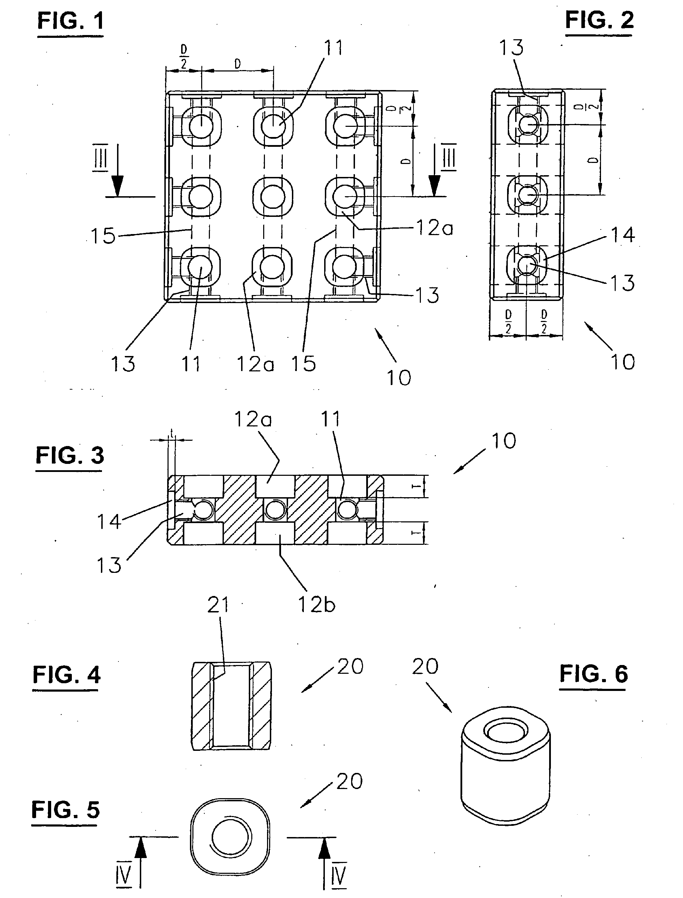

Fig. 1 - 3 zeigen beispielhaft eine Platte 10 eines erfindungsgemässen Bausatzes. Die Platte 10 ist im Wesentlichen quaderförmig ausgebildet und ist mit Durchgangsbohrungen 11 versehen, welche von der Oberseite der Platte 10 zu deren Unterseite führen und welche auf einem Raster angeordnet sind. Der Raster ist so gewählt, dass die jeweilige Mitte der Durchgangsbohrungen 11 auf den Gitterpunkten eines quadratischen Netzes liegen. Das Rastermass, d.h. der Abstand D zwischen zwei beliebigen benachbarten Durchgangsbohrungen 11 ist somit konstant.

Die in den Fig. 1 - 3 dargestellte Platte 10 weist folgende Abmessungen auf: die Länge und Breite entsprechen 3D, die Höhe entspricht D. Natürlich können diese Abmessungen so gewählt sein, dass sie beliebige Vielfache von D sind. Entsprechend ist auch die Gesamtzahl der Durchgangsbohrungen 11 anders. Durchgangsbohrungen 11, welche sich am Rand der Platte 10 befinden, sind um einen Abstand von D/2 von diesem entfernt. Wird nun an der Ober- oder Unterseite der Platte 10 oder an einer ihrer Seitenflächen eine weitere Platte 10 angeordnet, entspricht der Abstand zwischen zwei beliebigen benachbarten Durchgangsbohrungen 11 nach wie vor dem Wert D.

Je nach Anwendungszweck ist anstelle eines quadratischen Netzes auch ein anderer Raster denkbar, z.B. ein rechteckiges Netz, bei welchem der Abstand zwischen zwei Durchgangsbohrungen 11, die in senkrechter Richtung benachbart zueinander sind, verschieden vom Abstand ist, der zwei in waagrechter Richtung benachbarte Durchgangsbohrungen 11 haben. Als Raster ist auch eine polare Anordnung denkbar, bei welcher die Durchgangsbohrungen 11 jeweils um einen bestimmten Winkel versetzt auf Kreislinien angeordnet sind.

Im Weiteren muss nicht unbedingt auf allen Rasterpunkten eine Durchgangsbohrung 11 angeordnet sein, sondern es können beliebige Durchgangsbohrungen 11 weggelassen werden. Es ist auch denkbar, weitere Durchgangsbohrungen 11 vorzusehen, die nicht auf dem Raster liegen.

Wie insbesondere Fig. 3 zeigt, sind die Durchgangsbohrungen 11 abgestuft ausgebildet. Sie umfassen einen glatten, zylindrischen Mittelteil und weisen an den jeweiligen Enden Senkungen 12a und 12b auf, die nicht zylindrisch sind. Der Querschnitt der Senkungen 12a, 12b ist somit von einer kreisrunden Form verschieden, wodurch ein in der Senkung 12a, 12b aufgenommenes Verbindungselement gegen ein Verdrehen gesichert werden kann.

Im hier gezeigten Ausführungsbeispiel hat der Querschnitt der Senkungen 12a, 12b eine Form, die im Wesentlichen quadratisch ist, wobei die Ecken abgerundet sind. Es sind mannigfache nicht-kreisförmige Formen denkbar zur Bildung der Senkung 12a, 12b. Ihr Querschnitt kann z.B. eine der folgenden Formen haben: im Wesentlichen ein Polygon mit drei, vier oder mehr Ecken, ovale Form, Form eines Langlochs, eine beliebig andere Form, die sich aus geraden und/oder runden Abschnitten zusammensetzt, etc.

Wie insbesondere Fig. 2 und 3 zeigen, sind an den Seitenflächen der Platte 10 Bohrungen 13 angebracht, die auf dem Raster der Durchgangsbohrungen 11 liegen und somit einen Abstand voneinander haben, der dem Rastermass D entspricht. Die Bohrungen 13 sind gegenüber den Aussenflächen der Platte 10 jeweils durch eine Senkung 14 abgesetzt und mit einem Gewinde versehen, welches bis in die Durchgangsbohrung 11 hineinreicht. Der Querschnitt der Senkungen 14 ist gleich wie derjenige der Senkungen 12a, 12b. Die Tiefe t der Senkungen 14 braucht jedoch nicht mit der Tiefe T der Senkungen 12a, 12b übereinzustimmen.

Wie in Fig. 1 durch die gestrichelten Linien angedeutet, sind die Durchgangsbohrungen 11 durch Querbohrungen 15 verbunden, welche in der Verlängerung der Gewindebohrungen 13 angeordnet sind, die sich an der vorderen und hinteren Seitenfläche der Platte 10 befinden. Die Querbohrungen 15 dienen zum Durchleiten eines Fluids und können je nach Anwendungszweck der Platte 10 auch weggelassen werden.

Um die Platte 10 mit einer anderen Platte derselben Art zu verbinden, sind verschiedene Verbindungselemente vorgesehen.

Fig. 4 - 6 zeigen ein Verbindungselement 20, welches als Mutter für eine Befestigungsschraube dient und in Form einer Hülse mit einem Innengewinde 21 ausgebildet ist. Die Form der Aussenfläche der Mutter 20 ist komplementär zur Form der Senkung 12a, 12b, 14 gewählt. Dadurch ist das Verbindungselement 20 formschlüssig und passgenau mit der Platte 10 verbindbar, indem es in eine Senkung 12a, 12b, 14 eingefügt wird. Aufgrund der nicht-kreisförmigen Gestalt der Senkung 12a, 12b, 14 und des Verbindungselements 20 ist dieses gegen ein Verdrehen gesichert, z.B. dann, wenn eine in das Innengewinde 21 greifende Befestigungsschraube festgezogen wird.

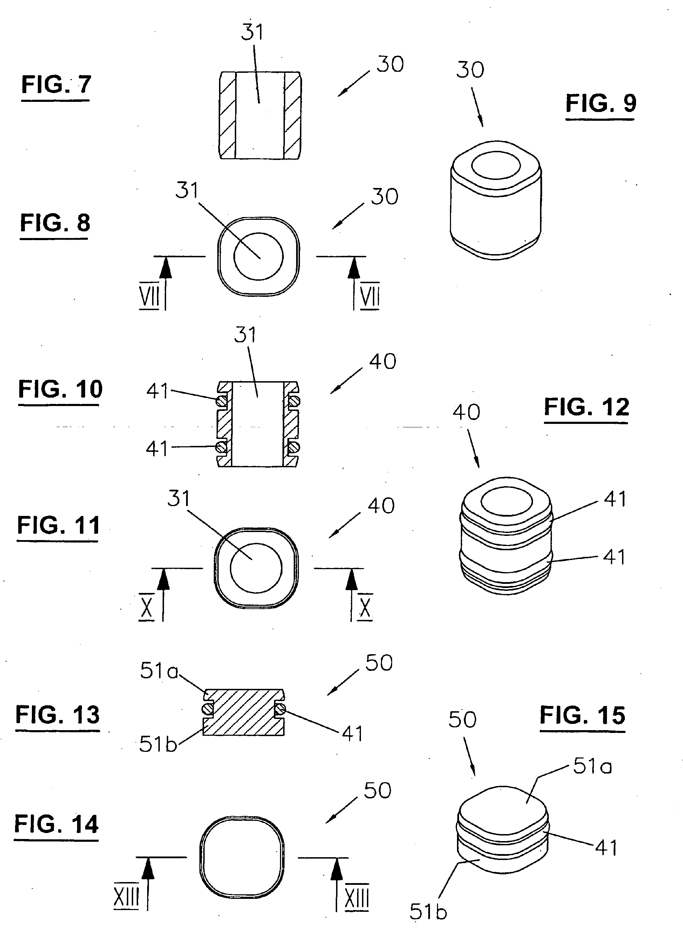

Fig. 7 - 9 zeigen ein Verbindungselement 30, welches als Zentrierelement zur Positionierung zweier Platten dient und mit einer glatten Durchgangsbohrung 31 versehen ist. Die Aussenflächen des Zentrierelements 30 haben dieselbe Form wie die Mutter 20. Zwei Platten 10 können mittels des Verbindungselements 30 präzise in Relation zueinander angeordnet werden, indem dieses in zwei gegenüberliegenden Senkungen 12a, 12b, 14 der beiden Platten 10 eingefügt wird.

Zur Bildung einer Anordnung, welche auch im Gebiet der Fluidtechnik einsetzbar ist, können Verbindungselemente mit Dichtmitteln vorgesehen sein.

Fig. 10 - 12 zeigen ein Verbindungselement 40, welches als Durchgangselement dient und ähnlich wie das Verbindungselement 30 ausgestaltet ist, jedoch mit zwei Nuten versehen ist, in welche O-Ringe 41 eingelassen sind. Mittels des Verbindungselements 40 kann zwischen zwei Platten - bis auf die Durchgangsöffnung 31 - eine dichtende Verbindung erzeugt werden.

Fig. 13 - 15 zeigen ein Verbindungselement 50, welches als Verschlusselement dient und mit welchem eine Bohrung 11, 13 der Platte 10 dicht verschlossen werden kann. Der untere Teil 51b des Verbindungselements 50 entspricht der Form der Senkung 12a, 12b, 14. Der obere Teil 51a weist eine Nut mit einem O-Ring 41 auf und ist insbesondere an der Oberseite geschlossen ausgebildet.

Es sind weitere Arten von Verbindungselementen mit Dichtmitteln denkbar, beispielsweise kann beim Verbindungselement 20 ein Dichtring 41 vorgesehen sein.

Zur Bildung eines Bausatzes sind die Verbindungselemente 20, 30, 40, 50 in verschiedenen Höhen gefertigt. Dadurch ist gewährleistet, dass je nach Senkung 12a, 12b, 14, in welche ein Verbindungselement 20, 30, 40, 50 eingefügt werden soll, zwei Platten 10 fugenlos verbunden werden können. Es sind auch Platten 10 in unterschiedlichen Abmessungen vorgesehen.

Es können auch Verbindungselemente vorgesehen sein, welche von der Art der Verbindungselemente 20, 30, 40, 50 sind, jedoch nicht an allen ihren Aussenseiten formschlüssig an den Innenwänden der Senkungen 12a, 12b, 14 anliegen, sondern ein Spiel aufweisen. Beispielsweise können die Aussenflächen in einer Richtung etwas zurückversetzt gestaltet sein, sodass das Verbindungselement, wenn es in eine der Senkungen 12a, 12b, 14 eingesetzt ist, in dieser Richtung ein Spiel aufweist, währenddessen es in der Richtung senkrecht dazu genau in der Senkung 12a, 12b, 14 positioniert ist.

Derartige Verbindungselemente mit Spiel können z.B. dazu dienen, zwei Platten so zu verbinden, dass sie nur in einer Richtung genau zueinander positioniert sind, währenddessen sie in der anderen Richtung relativ zueinander verschiebbar sind. Es ist auch denkbar, mittels Verbindungselementen mit Spiel Abweichungen auszugleichen, welche die Anordnung der Durchgangsbohrungen 11 vom vorgegebenen Raster aufweisen kann. Derartige Abweichungen können z.B. daher rühren, dass aufgrund von Temperaturveränderungen die Abmessungen der Platte 10 ändern. Trotz diesen Abweichungen können zwei Platten verbunden werden, indem z.B. in die Senkungen 12a, 12b, 14 ein Verbindungselement ohne Spiel und eines mit Spiel eingesetzt wird.

Als weitere Ausführungsform ist ein Verbindungselement denkbar, welches einen zylindrischen Querschnitt aufweist. Mit einem derartigen Verbindungselement ist eine Platte 10 um einen beliebigen Winkel gedreht mit einer zweiten Platte 10 verbindbar.

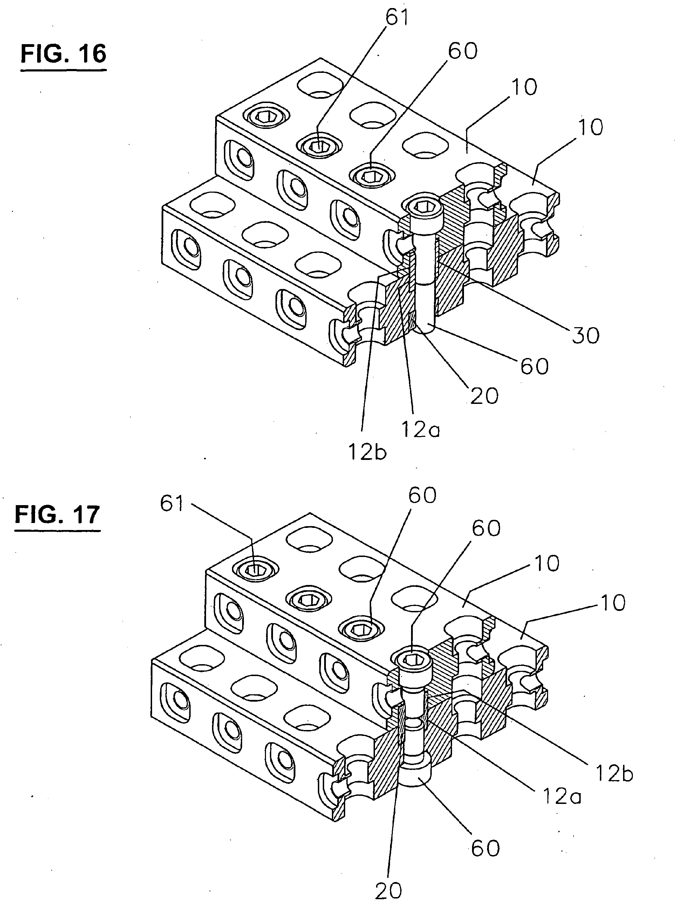

Fig. 16 und 17 zeigen jeweils ein Beispiel einer Anordnung mit zwei Platten 10 unterschiedlicher Abmessungen. Bei der Anordnung gemäss Fig. 16 sind die beiden Platten 10 mit Befestigungsschrauben 60 und Muttern 20 befestigt, wobei jeweils in den anliegenden Senkungen 12a und 12b jeweils ein Zentrierelement 30 eingefügt ist. Bei der Anordnung gemäss Fig. 17 ist in den anliegenden Senkungen 12a und 12b eine Mutter 20 eingefügt, in welche beidseitig jeweils das Ende einer Befestigungsschraube 60 greift.

Die Befestigungsschrauben 60 sind bekannter Art und in unterschiedlicher Länge ausgebildet, um Platten 10 fugenlos verbinden zu können. Der Kopf einer Befestigungsschraube 60 ist zylindrisch ausgestaltet und mit einer Vertiefung 61 versehen, in welche ein Werkzeug zum Festziehen oder Lösen der Befestigungsschraube 60 greifen kann. Die Vertiefung 61 ist z.B. als Innensechskant ausgebildet.

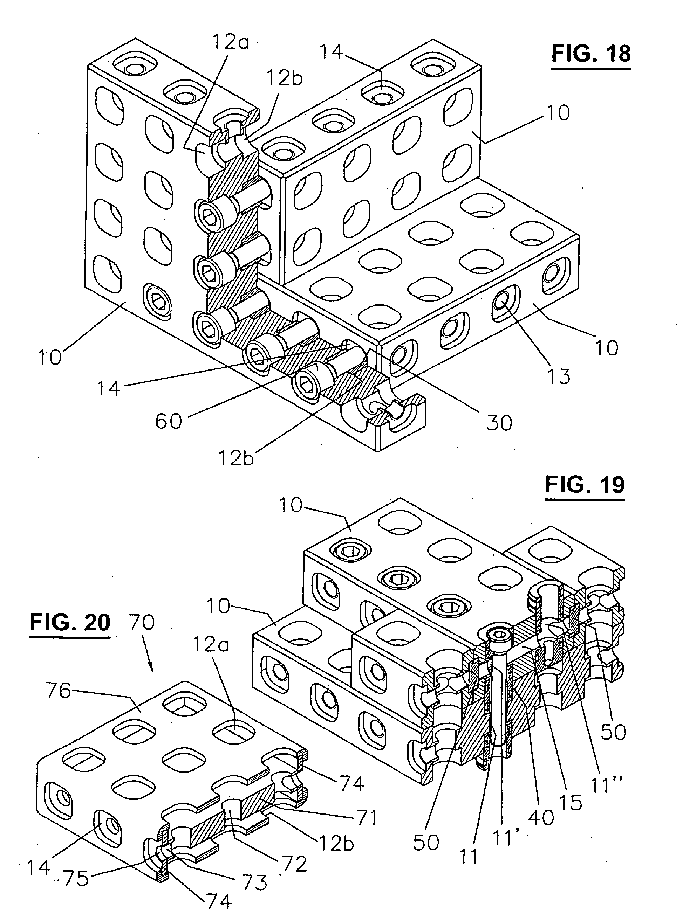

Mittels der Gewindebohrungen 13 kann eine Platte 10 auch an einer ihrer Seitenflächen mit einer anderen Platte 10 verbunden werden, wie dies im Beispiel gemäss Fig. 18 gezeigt ist. Zum Verbinden werden Zentrierelemente 30 in die anliegenden Senkungen 12b und 14 eingefügt und Befestigungsschrauben 60 in den Gewindebohrungen 13 festgeschraubt.

Die Verwendung der Verbindungselemente 40, 50 erlaubt es, die Bohrungen 11, 13 in den Platten 10 in gewünschter Weise abzudichten und somit als Kanäle auszubilden, durch welche ein gasförmiges oder flüssiges Fluid geleitetet werden kann.

Fig. 19 zeigt ein Beispiel, bei welchem zwei Platten 10 über ein Verbindungselement 40 verbunden sind, wobei die seitlichen Senkungen der oberen Platte 10 mit Verschlusselementen 50 verschlossen sind. Es ergibt sich somit ein fluidische Verbindung der Durchgangsbohrung 11 der unteren Platte 10 mit der anliegenden Durchgangsbohrung 11' der oberen Platte 10. Diese ist über die Querbohrung 15 ebenfalls fluidisch mit der gegenüberliegenden Durchgangsbohrung 11" verbunden.

Wie aus den Beispielen gemäss Fig. 16 - 19 ersichtlich, dienen die Senkungen 12a, 12b, 14 zur Aufnahme eines Verbindungselements 20, 30, 40, 50 und verhindern ein Verdrehen derselben. Die Senkungen 12a und 12b an der Ober- und Unterseite der Platte 10 bilden ebenfalls eine Aussparung, in welcher der Kopf einer Befestigungsschraube 60 aufnehmbar ist.

Die Platten 10 und die Verbindungselemente 20, 30, 40, 50, 60 sind aus einem Material gefertigt, welche ein genaue Verbindung erlauben, sodass die Platten 10 in einer präzisen Relation zueinander verbindbar sind. Als Material eignet sich z.B. Metall wie Aluminium oder Stahl. Die Senkungen 12a, 12b, 14 sind z.B. durch Fräsen herstellbar.

Die Platten 10 brauchen nicht unbedingt einteilig ausgebildet sein, sondern können auch aus mehreren Teilen gefertigt werden. Fig. 20 zeigt eine Variante einer mehrteiligen Platte 70. Diese umfasst eine Kernplatte 71, vier Seitenplatten 74 sowie Aussenplatten 76. Die Kernplatte 71 umfasst durchgehende Löcher 72 sowie an den Seiten Gewinde 73 zur Bildung der Gewindebohrungen 13 gemäss der Platte 10. Die Seitenplatten 74 umfassen Löcher 75, welche an die Gewinde 73 angrenzen und Teil der Gewindebohrungen 13 sind. Die Aussenplatten 76 sind mit den Senkungen 12a, 12b und 14 versehen. Die Ober- und Unterseite der Kernplatte 71 ist beabstandet zu den Aussenplatten 76 angeordnet, sodass die Löcher 72 und der Zwischenraum zwischen den Senkungen 12a bzw. 12b und den Löchern 72 die Durchgangsbohrungen 11 gemäss der Platte 10 bilden. Das Vorsehen eines materialfreien Zwischenraums gewährleistet einen besonders leichten Aufbau der Platte.

Zur Herstellung der Platte 70 werden die Seitenplatten 74 aus Blech gefertigt und mit der Kernplatte 71 fest verbunden, z.B. durch Kleben oder Schweissen. Die Aussenplatten 76 werden in Form einer Abwicklung eines Quaders aus Blech hergestellt, und derart gebogen, dass sie die Ränder der Seitenplatten 74 umgreifen. Die Ränder der Aussenplatten 76 werden schliesslich zusammengefügt, z.B. durch Kleben oder Schweissen.

Der erfindungsgemässe Bausatz hat u.a. den Vorteil, dass das Vorsehen von Senkungen mit einem nicht-kreisförmigen Querschnitt auf einfache Weise, ein aufgenommenes Verbindungselement gegen ein Verdrehen gesichert werden kann.

Mittels des erfindungsgemässen Bausatz können Anordnungen modulartig aufgebaut, die präzise Winkel und Distanzen aufweisen und die für verschiedene Anwendungen verwendbar sind, z.B. zum Aufspannen von Werkstücken in Bearbeitungs- und/oder Messmaschinen, als Montagevorrichtung, als Aufspannvorrichtung, etc. Es ist auch denkbar, mit dem Bausatz eine Trennwand aufzubauen, wie sie beispielsweise in Messeständen verwendet wird.

## Patentansprüche

1. Bausatz mit mindestens einer Platte (10; 70), welche auf einem Raster angeordnete Durchgangsbohrungen (11; 72) und
beidseitig der Durchgangsbohrungen angeordnete Senkungen (12a, 12b) zur Aufnahme eines Verbindungselements umfasst, **dadurch gekennzeichnet, dass**
der Querschnitt der Senkungen (12a, 12b) von einer kreisrunden Form abweicht, um ein in einer Senkung aufgenommenes Verbindungselement (20, 30, 40, 50) gegen ein Verdrehen zu sichern.

2. Bausatz nach Anspruch 1, wobei der Querschnitt der Senkungen (12a, 12b) eine Form aufweist, die gerade Abschnitte umfasst.

3. Bausatz nach einem der vorangehenden Ansprüche, wobei die Seitenflächen der Platte (10; 70) mit Gewindebohrungen (13; 73, 75) versehen sind.

4. Bausatz nach Anspruch 3, wobei an dem einen Ende der Gewindebohrungen (13; 73, 75) Senkungen (14) angeordnet sind, deren Form mit der Form der Senkungen (12a, 12b) der Durchgangsbohrungen (11) übereinstimmt.

5. Bausatz nach einem der vorangehenden Ansprüche, wobei der Raster quadratisch mit einem Rastermass D ist und wobei die Länge, Breite und/oder Höhe der Platte (10; 70) ein Vielfaches von D beträgt.

6. Bausatz nach einem der vorangehenden Ansprüche, mit mindestens einem Verbindungselement (20, 30, 40, 50), welches formschlüssig in die Senkungen (12a, 12b, 14) einfügbar ist.

7. Bausatz nach Anspruch 6, wobei das Verbindungselement (20, 30, 40) als Hülse ausgebildet ist.

8. Bausatz nach Anspruch 6 oder 7, wobei das Verbindungselement (20) ein Innengewinde (21) aufweist.

9. Bausatz nach einem der Ansprüche 6 bis 8, wobei das Verbindungselement (40, 50) ein Dichtmittel (41) umfasst.

10. Bausatz nach einem der vorangehenden Ansprüche, wobei die Platte (70) eine Kernplatte (71) mit Löchern (72) zur Bildung der Durchgangsbohrungen und Aussenplatten (76) umfasst, in welchen die Senkungen (12a, 12b) geformt sind, wobei die Senkungen beabstandet zur Kernplatte angeordnet sind.

## Claims

1. Construction set comprising at least one plate (10; 70), including
through bores (11; 72) that are arranged on a grid, and
counterbores (12a, 12b) that are arranged on both sides of the through bores for receiving a connecting element,
**characterised in that**
the cross-section of the counterbores (12a, 12b) deviates from a circular shape in order to rotationally secure a connecting element (20, 30, 40, 50) received in a counterbore.

2. Construction set according to claim 1, wherein the cross-section of the counterbores (12a, 12b) has a shape that includes straight sections.

3. Construction set according to any one of the preceding claims, wherein the lateral surfaces of the plate (10; 70) are provided with threaded bores (13; 73, 75).

4. Construction set according to claim 3, wherein at one end of the threaded bores (13; 73, 75), counterbores (14) are provided whose shape corresponds to the shape of the counterbores (12a, 12b) of the through bores (11).

5. Construction set according to any one of the preceding claims, wherein the grid is a square grid having a grid dimension D, and wherein the length, width, and/or the height of the plate (10; 70) is a multiple of D.

6. Construction set according to any one of the preceding claims, comprising at least one connecting element (20, 30, 40, 50) that is insertable into the counterbores (12a, 12b, 14) in a form-fitting manner.

7. Construction set according to claim 6, wherein the connecting element (20, 30, 40) is in the form of a sleeve.

8. Construction set according to claim 6 or 7, wherein the connecting element (20) has an internal thread (21).

9. Construction set according to any one of claims 6 to 8, wherein the connecting element (40, 50) comprises a sealing means (41).

10. Construction set according to any one of the preceding claims, wherein the plate (70) comprises a core plate (71) having holes (72) forming the through bores and outer plates (76) in which the counterbores (12a, 12b) are shaped, the counterbores being arranged at a distance from the core plate.

## Revendications

1. Kit de construction comprenant au moins un panneau (10; 70) ayant
des alésages traversants (11; 72) arrangés sur un réseau et
des logements (12a, 12b) pourvus de chaque côté des alésages traversants pour recevoir un élément de connexion,
**caractérisé en ce que**
la coupe transversale des logements (12a, 12b) dévie d'une forme circulaire afin de bloquer en rotation un élément de connexion (20, 30, 40, 50) reçu dans un logement.

2. Kit de construction selon la revendication 1, où la coupe transversale des logements (12a, 12b) présente une forme qui comprend des sections droites.

3. Kit de construction selon l'une des revendications précédentes, où les surfaces latérales du panneau (10; 70) sont pourvues d'alésages taraudés (13; 73, 75).

4. Kit de construction selon la revendication 3, où à l'une des extrémités des trous taraudés (13; 73, 75) sont pourvus de logements (14) dont la forme correspond à la forme des logements (12a, 12b) des alésages traversants (11).

5. Kit de construction selon l'une quelconque des revendications précédentes, où le résau est carré avec un intervalle de réseau D et où la longueur, la largeur et/ou la hauteur du panneau (10; 70) est un multiple de D.

6. Kit de construction selon l'une quelconque des revendications précédentes, comprenant au moins un élément de connexion (20, 30, 40, 50) pouvant être engagé positivement dans les logements (12a, 12b, 14).

7. Kit de construction selon la revendication 6, où l'élément de connexion (20, 30, 40) présente la forme d'une douille.

8. Kit de construction selon la revendication 6 ou 7, où l'élément de connexion (20) présente un taraudage (21).

9. Kit de construction selon l'une quelconque des revendications 6 à 8, où l'élément de connexion (40, 50) comprend un moyen d'étanchéité (41).

10. Kit de construction selon l'une quelconque des revendications précédentes, où le panneau (70) comprend un noyau de panneau (71) ayant des trous (72) pour former les alésages traversants et des panneaux extérieurs (76) dans lesquels les logements (12a, 12b) sont formés, les logements étant agencés à un écart du noyau de panneau.
